# EUROPEAN PATENT APPLICATION

(11) **EP 4 369 546 A1**
(43) Date of publication of application: **15.05.2024**
(21) Application number: 22207219.1
(22) Date of filing: 14.11.2022
(51) Int. Cl.: H02J 3/00, H02J 3/38

(54) **OPERATION OF A CONVERTER SYSTEM IN THE EVENT OF A MALFUNCTION**

(71) Applicant: Siemens Gamesa Renewable Energy A/S, 7330 Brande (DK)
(72) Inventor: Schult, Matthias, 7451 Sunds (DK)
(74) Representative: SGRE-Association

(57) **Abstract**

A method of operating a converter system of a wind turbine is provided. The converter system comprises one or more power converters (110, 140) that convert electrical power generated by a power generation system (101) of the wind turbine. At least one of the one or more power converters (110, 140) comprises plural parallel connected converter modules (130a-d) each of which is configured to convert at least a portion of the generated electrical power. Operating the converter system (102) comprises monitoring one or more parameters of at least the converter system and/or the power generation system, detecting a malfunction of one or more of the converter modules (130a-d), and determining, based on the monitored parameters, a type of the detected malfunction. Operating the converter system (102) further comprises when the determined type is of a first type, performing a first mitigation action for the one or more converter modules for which the malfunction has been detected and continuing the operation of the power converter (110) that comprises the one or more malfunctioning converter modules with one or more remaining converter modules for which the malfunction has not been detected. Operating the converter system (102) further comprises when the determined type is of a second type, performing a second mitigation action for the power converter (110) that is different from the first mitigation action.

## Description

### FIELD OF THE INVENTION

The present invention relates to a method of operating a converter system of a wind turbine. It further relates to a computer program for performing such method and to a control system configured to carry out such method. It further relates to a system comprising such converter system and control system.

### BACKGROUND

A wind turbine generates electrical power from a generator, the rotor of which is driven by inflowing wind. The generated electrical power is usually fed into a power grid after being converted by a converter system. Such a converter system may comprise plural power converters each of which is arranged in a converter string, the strings and thus the power converters being connected in parallel. Such a topology is useful since it may allow distributing the load of converting the generated electrical power between the plural power converters and may further allowing continuing operation of the wind turbine in the event of a malfunction.

However, when a malfunction of one of the power converters occurs, operating the wind turbine may not be continued without strongly restricting the power generation of the wind turbine. For example, when the converter system consists of two parallel connected power converters and one of the converters is malfunctioning, further operating the wind turbine may at first require disconnecting the malfunctioning converter and reducing the power generation of the wind turbine to approximately a half of the nominal power output (e.g., 3000 kW for a 6000 kW wind turbine generator). Moreover, basing the operation of the wind turbine on a reduced number of power converters may result in an increased load on the power converters that remain in operation. The increased load may lead to increased wear and tear of the remaining power converters and, thus, to a reduced lifetime of the converter system.

Furthermore, a malfunction occurred in a power converter of the converter system may require that a person inspects the malfunctioning power converter on-site and, when required, repair the malfunction on-site. Before the inspection/reparation, the operation of the malfunctioning power converter may not be continued in order to prevent potential damage to the wind turbine or its components caused by the malfunction, e.g., caused by a short circuit in the malfunctioning power converter. It may even be required to stop the operation of the wind turbine. In other words, from the occurrence of the malfunction until the visual inspection/reparation, the power generation of the wind turbine may be stopped or at least strongly reduced, as mentioned above.

### SUMMARY

Accordingly, there is the need to mitigate at least some of the drawbacks mentioned above and to provide a more flexible solution of operating a converter system of a wind turbine in the event of a malfunction of the converter system, in particular a solution that requires less reduction of power generation of the wind turbine.

This need is met by the features of the independent claims. The dependent claims describe embodiments of the invention.

According to an aspect of the invention, a method of operating a converter system of a wind turbine is provided. The converter system comprises one or more power converters that convert electrical power generated by a power generation system of the wind turbine. At least one of the one or more power converters comprises plural parallel connected converter modules each of which is configured to convert at least a portion of the generated electrical power. Operating the converter system comprises monitoring one or more parameters of at least the converter system and/or the power generation system, detecting a malfunction of one or more of the converter modules, and determining, based on the monitored parameters and preferably by a control system, a type of the detected malfunction. Operating the converter system further comprises when the determined type is of a first type, performing, preferably by the control system, a first mitigation action for the one or more converter modules for which the malfunction has been detected and continuing the operation of the power converter that comprises the one or more malfunctioning converter modules with one or more remaining converter modules for which the malfunction has not been detected. Operating the converter system further comprises when the determined type is of a second type, performing a second mitigation action for the power converter that is different from the first mitigation action.

Since the type of the detected malfunction is determined, e.g., automatically by the control system or manually, and preferably remotely, an on-site inspection/reparation of the power converter that comprises the one or more malfunctioning converter modules (malfunctioning power converter) may no longer be required before the operation of the malfunctioning power can be converter continued. Thus, operating the converter system may be more flexible and the effort for continuously maintaining the operation may be reduced. Since the on-site inspection/ reparation may be no longer required, a period during which the operation of one of the power converters or even of the wind turbine has to be stopped may be not or nearly non-existent. Since the power converter comprises plural converter modules, not the complete malfunctioning power converter or a converter string in which the power converter is arranged may be required to be stopped or decoupled/disconnected. Instead, only the one or more modules for which the malfunction has been determined may be decoupled/disconnected. The remaining modules may continue operation. Accordingly, the solution may require less reduction of power generation of the wind turbine. Further, determining the type of the malfunction may allow to derive a risk of potential damage that may be caused by the malfunction. Since the type of the malfunction is known, the continuation of the operation of the converter system after the malfunction has occurred may be less risky.

The power generation system may comprise one or more components being capable of receiving and/or outputting electrical power, e.g., an electrical generator, for example a generator of the wind turbine, in particular an asynchronous or synchronous generator, and/or an energy storage system of the wind turbine.

The converter system may be configured to convert electrical power. The converter system may be configured to convert alternating current (AC) into direct current (DC) and vice versa, or AC to AC. The converter system may change voltage and/or frequency of the current. The converter system may comprise a DC-link.

A power converter described herein may be configured to convert electrical power. The power converter may be configured to convert alternating current into direct current and vice versa, or AC to AC. The power converter may change voltage and/or frequency of the current. The power converter may comprise a DC-link.

A converter module described herein may be configured to convert electrical power. The converter module may be configured to convert alternating current into direct current and vice versa, or AC to AC. The converter module may change voltage and/or frequency of the current. The converter module may comprise a DC-link.

Monitoring may for example be performed - but is not limited to - by means of at least one of a sensor, a sensing system, a model, in particular a mathematical and/or physical model, being implemented in software, and a filter-based monitoring system, which may for example be a state observer, Kalman filter or the like. The result of monitoring may be a signal of the monitored parameter, e.g., a discrete or continuous signal that indicates a progression of the monitored parameters by plural values generated by the monitoring. Monitoring may further comprise signal pre- and post-processing, e.g., filtering. Further, monitoring may utilize information obtained from hardware, e.g., one or more sensors, implemented for the purpose of monitoring and/or may utilize information obtained from hardware implemented for another purpose. Monitoring may further comprise an estimating and/or predicting, preferably based on obtained information.

It should be clear that a parameter may be monitored directly (e.g., by measurement) or indirectly (e.g., monitoring current by measuring a voltage across an impedance). It should further be clear that if a parameter is monitored for a particular component, it may be monitored remotely from this component, e.g., at a second component.

The one or more parameters may be indicative of an operation of the converter system and may be monitored at the power conversion system and/or at another position, for example at the power generation system.

Performing the second mitigation action may comprise taking the power converter that comprises the one or more malfunctioning converter modules (malfunctioning power converter) out of circuit/out of operation, or decoupling/disconnecting the malfunctioning power converter and/or stopping/ceasing the operation of the malfunctioning power converter. Preferably, the second mitigation action may be (automatically) performed by the control system and/or the second mitigation action may be remotely initiated.

In an example, the one or more power converters of the converter system may be arranged in one or more converter strings. Preferably, the converter system comprises plural power converters arranged in plural converter strings, the plural converter strings being connected in parallel.

Operating the converter system may further comprise continuing the operation of the converter system without the malfunctioning power converter, e.g., when taking the second mitigation action. Preferably and when the converter system comprises the plural converter strings, the operation may be continued with one or more remaining power converters of the converter system.

In an example, at least one of detecting the malfunction and determining the type of the detected malfunction may be performed at a remote site being remote from the converter system, for example by the control system or by a human evaluating the monitored parameters. In such example, the method may comprise transferring/communicating the monitored parameters to the remote site (e.g., from a monitoring site at which the one or more parameters are monitored) and/or, in dependance on the type determined at the remote site, obtaining/receiving from the remote site a control signal/command to perform the first or second mitigation action.

According to an example, performing the first mitigation action comprises decoupling/disconnecting the one or more malfunctioning converter modules from the power converter that comprises the malfunctioning converter modules. Additionally or alternatively, performing the first mitigation action may comprise stopping/ceasing the operation of the one or more malfunctioning converter modules. Preferably, the first mitigation action may be (automatically) performed by the control system and/or the first mitigation action may be remotely initiated.

The decoupling may be an electrically decoupling, e.g., by disconnecting/stopping the power flow of the power to be converted through the one or more malfunctioning converter modules.

Performing the second mitigation action may comprise stopping/ceasing operation of the power converter comprising the one or more malfunctioning converter modules.

The first mitigation action and/or the second mitigation action may be controlled remotely/from a remote location. (e.g., from a site that is remote from the wind turbine, e.g., at a central controller of the wind farm, e.g., at an onshore site for an offshore windfarm)

In an example, the second type comprises a malfunction, particularly a hardware-based malfunction, the malfunction being harmful for the wind turbine or components of the wind turbine when the operation of the wind turbine is continued with the malfunctioning power converter, in particular with the one or more malfunctioning converter modules.

According to an example, the second type of the detected malfunction comprises a malfunction of a component of the one or more converter modules associated with the flow of electrical power to be converted through the one or more converter modules, preferably, a hardware-based malfunction of power electronics included in the one or more malfunctioning converter modules (e.g., a short circuit included in the power electronics). Preferably, the component of the one or more converter modules comprises at least one of one or more switching units, a DC-link, a voltage control unit of the DC-link and one or more filters.

In an example, the first type may comprise a malfunction that is not harmful for the wind turbine or components of the wind turbine when the operation of the wind turbine is continued with the malfunctioning power converter, in particular with the one or more malfunctioning converter modules.

According to an example, at least one of the monitored parameters is monitored at a first site and communicated to a second site, and the first type of the detected malfunction comprises a malfunction of the communication between the first site and the second site. The first site may be different from the second site, in particular spaced apart from or remote from the second site. The second site may for example be a site of a wind farm controller, for example and onshore site. The first site may be an offshore site.

When the determined type is of the first type, the malfunctioning converter modules may be disconnected from the malfunctioning power converter and the remaining non-malfunctioning modules may be kept in operation without a risk that the wind turbine or its components are damaged. In dependence on the number of the remaining converter modules, the power generation of the wind turbine may not have to be reduced, or only slightly.

According to an example, at least one of the monitored parameters is indicative of an operational state of the converter system. Preferably, the operational state comprises at least one of a power, a voltage and a current of the converter system, in particular of the at least one of the one or more power converters and more particularly of at least one of the parallel connected converter modules.

According to an example, the monitored power may comprise a power input and/or a power output of at least one of the one or more malfunctioning converter modules. Alternatively or additionally, the monitored voltage may comprise a voltage input and/or a voltage output of at least one of the one or more malfunctioning converter modules. Alternatively or additionally, the monitored current may comprise a current input and/or a current output of at least one of the one or more malfunctioning converter modules. Alternatively or additionally, at least one of the one or more malfunctioning converter modules may comprise or may be coupled with a DC-link. The monitored voltage may comprise a DC-link voltage of the DC-link and/or the monitored current may comprise a DC-link current of the DC-link.

In an embodiment, at least one of the monitored parameters may be indicative of communicatively provided hardware information data, the hardware information data being in particular provided by at least at least one of the one or more malfunctioning converter modules.

For example, when nameplate data (which usually is static data, e.g., a serial number) that is provided by a converter module, e.g., via network-based communication, abruptly changes, the change may indicate a communication-based malfunction, i.e., a malfunction of the first type.

In an example, determining if the malfunction is of the first type or of the second type is based on a transient response of the monitored parameter, in particular on a presence or absence of a transient response. Preferably, the malfunction is of the first type if no transient response is present and is of the second type if a transient response is present. The transient response may for example comprise a signal portion having a ringing and/or overshoot/undershoot.

Determining the type of the detected malfunction may comprise determining whether at least one of the monitored parameters satisfies one or more conditions associated with one type, wherein the detected malfunction is of the one type when the one or more conditions are satisfied. Preferably, the one or more conditions may be predefined.

The one type may for example be the first type or the second type.

Determining the type of the detected malfunction may comprise obtaining one or more reference values for at least one of the one or more monitored parameters, the reference values being indicative of the one type and obtaining, by the monitoring, one or more monitored values for the at least one monitored parameter. The determining may further comprise computing a deviation between the obtained reference values and the obtained monitored values and basing the determination of the type of the detected malfunction on the deviation, e.g., by determining whether the deviation satisfies at least one of, in particular all of, the one or more conditions. Preferably, the reference values may be ideal or expected values, e.g., derived from historical/empirical data.

It should be clear that one or more deviations may be computed and that the number of computed deviations may depend on the number of monitored parameters for which reference values are obtained and/or on the number of conditions, the satisfaction of which is to be determined.

Basing the determination of the type of the detected malfunction on the deviation may comprise determining, based on the deviation, a magnitude of noise acting on the obtained monitored values and/or a time delay between the obtained reference values and the obtained monitored values.

Determining the type of the malfunction may comprise determining that the deviation is below or exceeds a threshold in order to determine that the type is the one type.

Determining the type of the detected malfunction may alternatively or additionally be based on a classification algorithm, e.g., logistic regression, naive Bayes, nearest neighbors or the like, or based on an algorithm using a neural network.

According to an example, operating the converter system comprises detecting an increased temperature of and/or a destructive impact on the one or more malfunctioning converter modules, and basing the determination of the type of the malfunction further on the detection of the increased temperature and/or the destructive impact. Preferably, the detection is based on obtaining a thermal, visual and/or audible indication (e.g., obtained by monitoring) of the increased temperature and/or the destructive impact, and/or detecting the increased temperature and/or the destructive impact comprises detecting at least one of heat, smoke, noise and an electrical short-circuit (e.g., by a heat detector and/or by a smoke detector).

The destructive impact may be a mechanical damage and/or an electrical loading above a maximum allowed loading.

According to an aspect of the invention a control system for controlling an operation of a converter system of a wind turbine is provided. The converter system may comprise one or more power converters that convert electrical power generated by a power generation system of the wind turbine. The control system may for example include a processing unit and a memory unit, the memory unit storing control instructions which when executed by the processing unit of the control system, cause the control system to perform any of the herein described methods. The processing unit may for example include a digital signal processor, an application specific integrated circuit, a field programmable gate array, a microprocessor or the like. The memory unit may include RAM, ROM, Flash Memory, a hard disk drive and the like.

It should be clear that when one or more method steps are herein explicitly indicated not to be performed by a control system that the control system may then be configured such that the control system does not perform such indicated one or more method steps but only the remaining one or more method steps.

The control system may be located at a site at which the converter system is located or at a site that is different from the site at which the converter system is located.

In an example, the control system may comprise at least a first control system and a second control system, the first control system controlling the operation of the converter system. The first control system and the second control system may be communicatively coupled, and the second control system may be configured to initiate the performing of the first or second mitigation action by the first control system (e.g., by sending a respective control signal to the first control system). Preferably, the first control system may be located at a site at which converter system is located and the second control system may be located at a (remote) site that is different from the site at which the converter system is located.

According to an aspect of the invention, a converter system of a wind turbine is provided. The converter system comprises one or more power converters that are configured to convert electrical power generated by a power generation system of the wind turbine. At least one of the one or more power converters comprises plural parallel connected converter modules each of which is configured to convert at least a portion of the generated electrical power. The converter system is configured to be controlled by any of the herein described control systems.

The converter system may be arranged inside or outside the wind turbine.

According to an aspect of the invention, a wind turbine is provided. A power generation system of the wind turbine is electrically coupled to any of the herein described converters systems.

The wind turbine may be an offshore or onshore wind turbine.

According to an aspect of the invention a system is provided. The system comprises any of the herein described converter systems, the converter system being configured to convert electrical power generated by a power generation system of a wind turbine. The system further comprises any of the herein described control systems, the control system being communicatively coupled with the converter system. The control system is configured to control an operation of the converter system.

According to an aspect of the invention, a computer program for controlling an operation of a converter system is provided. The computer program comprises control instructions which, when executed by a processing unit of a control system controlling the operation of the converter system, cause the processing unit to perform any of the herein described methods. The computer program may be provided on a volatile or non-volatile storage medium or data carrier.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

It should be clear that all method features or functional features are without limitation applicable as a feature in isolation, as a combination of features, or in any sub-combination in a device or system described herein and are disclosed hereby. Likewise, all device or system features or structural features are without limitation applicable as a feature in isolation, as a combination of features, or in any sub-combination to a method described herein and are disclosed hereby.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing illustrating a converter system of a wind turbine according to an exemplary implementation.
Fig. 2 is a schematic diagram illustrating voltage signals of a converter module according to a first and a second type of malfunction over time according to an example.
Fig. 3 is a schematic diagram illustrating current signals of a converter module according to a first and a second type of malfunction according to an example.
Fig. 4 is a schematic flow diagram illustrating a method of operating a converter system of a wind turbine according to an exemplary implementation.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

It should be clear that descriptions and explanations herein which are limited to a single wind turbine may be applied to other/all wind turbines of a wind park comprising the single wind turbine.

The first/second type of malfunction may herein also be referred to as first/second malfunction type. The power converter that comprises the one or more malfunctioning converter modules may herein also be referred to as malfunctioning power converter.

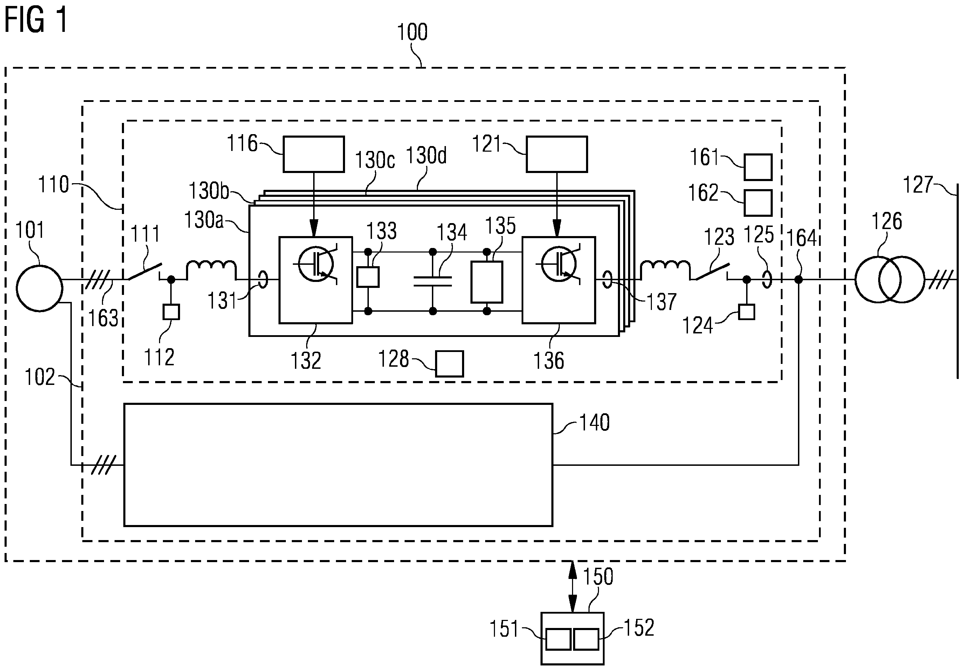

Figure 1 is a schematic drawing illustrating a converter system 102 coupled to a power generation system 101 of a wind turbine 100 according to an exemplary implementation. The wind turbine 100 may be electrically coupled via a transformer 126 to a power grid 127. The converter system 102 may comprise plural power converters 110, 140 that convert three-phase electrical power generated by the power generation system 101. In the shown example, each of the power converters 110, 140 is arranged in a separate converter string. The strings are connected to the power generation system 101 and to each other at coupling point 164. Each of the power converters 110, 140 may be configured to convert a portion of the generated electrical power. For example, each of the power converters 110, 140 may implement an AC/AC conversion.

Power converter 140 (in fig. 1 shown as black box) may be configured similarly (or identically) to power converter 110, i.e., converter 140 may have the same components and topology as power converter 110. The explanations provided herein with respect to power converter 110 may thus also apply to power converter 140.

Power converter 110 may be configured to be connected to/disconnected from the converter system 102, e.g., by means of switches 111, 123. When one of the power converters 110, 140 is disconnected and the operation of the wind turbine is continued, the generated electrical power may pass the remaining power converter.

The power converter 110 may comprise plural parallel connected converter modules 130a-130d each of which may be configured to convert a portion of the generated electrical power provided to power converter 110. Like the power converter 110, each of the modules 130a-130d may be configured to be connected to/disconnected from the power converter 110 and thus to/from converter system 102. The power converter 110 may be communicatively coupled with a control system 150, e.g., via communication unit 128. The connecting/disconnecting of one of the modules 130a-130d may for example be performed by switches (not shown in fig. 1) configured to switch in response to a control signal provided by the control system 150. When one of the modules 130a-130d is disconnected from the power converter 110 and the operation of the wind turbine is continued, the generated electrical power that passes the power converter 110 may be converted by using the remaining converter modules.

Converter modules 130b-130d may be identical to converter module 130a, i.e., each of the converter modules 130b-130d may have the same components and topology as converter module 130a. The explanations provided herein with respect to converter module 130a may thus also apply to each of the remaining converter modules 130b-130d.

For converting the generated electrical power provided to converter module 130a, converter module 130a may comprise a generator side converter 132 for AC/DC conversion and a grid side converter 136 for DC/AC conversion. The converter module 130a may further comprise a DC-link 134 and a voltage control unit 135, e.g., a braking chopper, for controlling the DC-link voltage. Each of the generator side converter 132 and the grid side converter 136 may comprise one or more switching units, for example insulated gate bipolar transistors (IGBTs), the switching of which is controlled by control signals generated by control signal generating unit 116 and control signal generating unit 121, respectively. Moreover, the converter module 130a may comprise one or more filters (not shown in fig. 1) configured to filter a voltage and/or current of the converter module 130a.

The converter module 130a or the control system 150 may comprise one or plural monitoring units for monitoring parameters indicative of an operational state of the converter module 130a. The converter module may for example comprise a current monitoring unit 131 for monitoring an input current input to the converter module 130a, a current monitoring unit 137 for monitoring an output current output by the converter module 130a, and a voltage monitoring unit 133 for monitoring a DC-link voltage of DC-link 134.

Moreover, further monitoring units may be comprised by power converter 110 or control system 150 for monitoring parameters indicative of an operational state of power converter 110 and, thus, also indicative of an operational state of converter modules 130a-d. For example, the power converter 110 may comprise a voltage monitoring unit 112 for monitoring an input voltage input to power converter 110, a voltage monitoring unit 124 for monitoring an output voltage output by power converter 110 and a current monitoring unit 125 for monitoring an output current output by power converter 110.

The control system 150 may comprise a processing unit 151 and a memory unit 152 and may be communicatively coupled with at least the power generation system 101 and with the converter system 102, in particular with the power converters 110, 140 and the components of the power converters 110, 140. The control system 150 may be configured to control the operation of the converter system 102. More specifically, the control system 150 may be configured to detect a malfunction of one or more of the converter modules included in the converter system 102 and, in dependance on a determined type of the malfunction, to perform a mitigation action. For this purpose, the control system 150 may be configured to obtain/receive the monitored parameters and to generate control signals which are provided to the converter system 102. The provided control signals may for example cause a first mitigation action when a first malfunction type is determined and a second mitigation action when a second malfunction type is determined.

A control signal causing the first mitigation action may for example comprise a control signal to decouple/disconnect the converter modules for which the malfunction has been detected. The control signal may be (automatically) generated by control system 150. Optionally, the control signal may be (automatically or manually) initiated from remote. For example, the malfunctioning converter modules may be remotely decoupled/disconnected. When the first mitigation action is performed, the operation of the power converter that comprises the malfunctioning converter modules may be continued with the remaining converter modules for which the malfunction has not been detected. Since the first type of malfunction does not require to completely disconnect the malfunctioning power converter but only its malfunctioning converter modules, the power generation of the wind turbine may be less reduced and kept higher than when the power converter has to be completely disconnected.

In contrast, performing the second mitigation action may for example comprise providing a control signal to the converter system to decouple/disconnect the power converter that includes the malfunctioning converter modules, or may even comprise the providing of a control signal to stop the wind turbine 100. Optionally, such a control signal may be (automatically or manually) initiated from remote. For example, the malfunctioning power converter may be remotely decoupled/disconnected. When the second mitigation action is performed, the operation of the converter system 102 may not be continued or may be continued only with the remaining power converters which requires a large reduction of the power output of the wind turbine 100.

Determining the malfunction types and performing different respective mitigation actions in response to the determination may thus reduce the average duration of stopped or reduced power generation of the wind turbine 100 due to a malfunctioning converter system 102.

The first malfunction type may for example comprise such malfunctions that do not require an on-site visual inspection and/or performing a mitigation action on-site, e.g., since a risk of damage is low or not existent when the wind turbine 100 continues operation without the visual inspection and/or without performing the mitigation action on-site. The first type of malfunction may for example include or be a malfunction that does not affect the power flow of the electrical power to be converted through the respective converter module, and/or that does not affect the control of this power flow.

The first type may for example comprise a malfunction of the communication between a first site at which at least a part of the monitored parameters is monitored and a second site to which the monitored parameters are communicated, e.g., due to a malfunction of the communication unit 128. Since a malfunction of the communication is not/is likely not harmful for the converter system 102 or other components of the wind turbine 100, the operation of the wind turbine 100 may be continued with the malfunctioning power converter or, more specifically, with the converter modules for which the malfunction has not been detected. Before the operation is continued, the malfunctioning converter modules may be software-based/remotely disconnected/decoupled from the malfunctioning power converter.

The second malfunction type may for example comprise malfunctions that do require an on-site visual inspection and/or performing a mitigation action on-site. For example, such malfunctions create a risk of damage to the converter system 102 or other components of the wind turbine 100 that is rather high when the wind turbine 100 continues operation without the visual inspection and/or without performing the mitigation action on-site. The second type of malfunction may for example include or be a malfunction that does affect the power flow of the electrical power to be converted through the respective converter module, and/or that does affect the control of this power flow, such as a malfunction of the power electronic switches of the converter module, of the PWM modulator of the converter module or of a converter controller of the converter module that controls the PWM modulation.

Performing the mitigation action on-site may for example comprise removing a malfunctioning converter module from a power converter 110,140, e.g., when the malfunctioning converter module includes a short circuit. Removing may be required since the short circuit may even create a risk of damage to the converter system 102 or other components of the wind turbine 100 when the malfunctioning converter module is software-based/remotely decoupled/disconnected (but still arranged in the power converter). In another example, performing the mitigation action for a detected second type malfunction may comprise software-based/remotely decoupling/disconnecting the power converter that includes the malfunctioning converter modules (e.g., by switches 111, 123).

As mentioned, the second type may for example comprise a (hardware-based) malfunction of a component of at least one of the converter modules, the component being associated with the flow of electrical power to be converted through the at least one converter module. E.g., the malfunctioning component may comprise at least one of one or more switching units of the converters 132, 136, the DC-link 134, the voltage control unit 135 of the DC-link 134 and the filters. As mentioned, since such hardware-based malfunction may be harmful for the converter system 102 or components of the wind turbine 100, the operation of the wind turbine may not be continued with the malfunctioning power converter. Therefore, continuing the operation of the wind turbine 100 may require that the malfunctioning power converter is removed on-site or at least completely decoupled/disconnected from the converter system 102.

In summary, compared to the first mitigation action that may allow a software-based (and remote) decoupling/disconnecting of the malfunctioning converter modules only, performing the second mitigation action may be accompanied with a higher or more prolonged reduced power generation. In other words, each time the first mitigation action instead of the second mitigation action is performed, the loss of generated power is reduced.

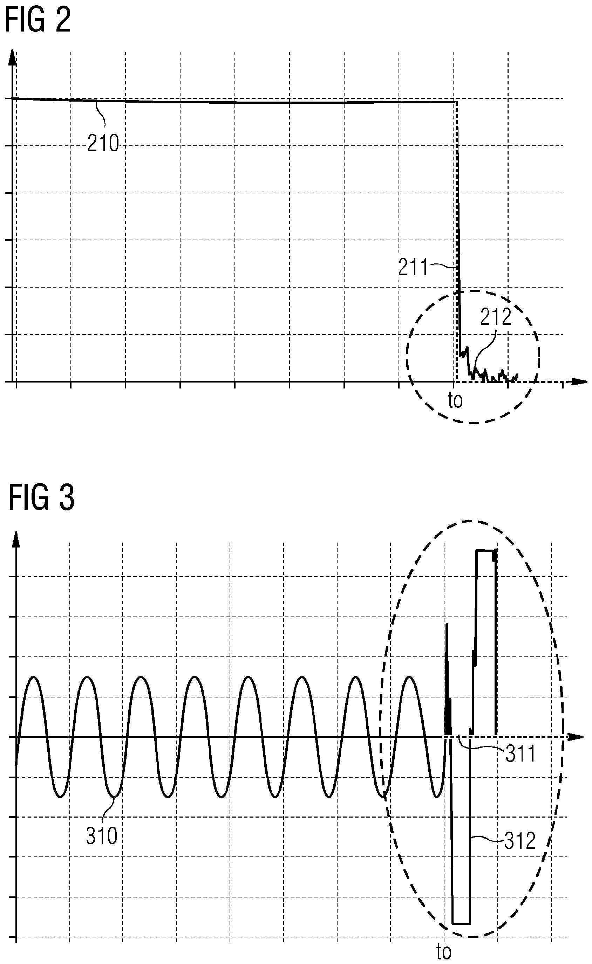

As mentioned, determining the type of a malfunction that has occurred may be based on the monitored parameters. Referring to figures 2 and 3, the figures illustrate exemplary signals that may be monitored by voltage monitoring unit 133 and current monitoring unit 131, respectively.

Figure 2 is a schematic diagram illustrating voltage signals 211, 212 over time according to a first and a second type of malfunction according to an example. The voltage signals may be DC-link voltage signals of the DC-link of one of the converter modules 130a-130d of one of the power converters 130, 140. Each of the voltage signals comprises a signal part 210 before an occurrence of the respective malfunction at time t0. After the occurrence of the malfunction, i.e., after time t0, the voltage signal 211 according to the first type of malfunction is continued as depicted by the dashed line and the voltage signal 212 according to the second type of malfunction is continued as depicted by the solid line. In the event of the malfunction of the communication (first type malfunction), e.g., a communication loss, the voltage signal 211 (dashed line) does abruptly drop in a step from the last communicated value to a zero value for the next sample of the signal. In contrast, in the event of the hardware-based malfunction of the power electronics (second type malfunction), the drop may be delayed, e.g., since the drop follows a dynamic as for example the dynamic of a discharging DC-link, and/or may be significantly affected by noise, as shown by voltage signal 212 (solid line). In particular, such second type malfunction (e.g., malfunction of converter unit hardware) may cause a transient response that can be distinguished from the signal in case of communication loss (i.e. first type of malfunction).

For the purpose of illustration, the different sections of signals 211, 212 after the occurrence of the respective malfunction at time t0 are highlighted by the dashed ellipse framing both signal sections.

Signal 212 may for example be a signal monitored by monitoring unit 133, i.e., a signal that includes actual values of the DC-link voltage. Considering the dynamic of signal 211 as indicative of the occurrence of a malfunction of the first type, the signal 211 may be used as reference/ideal signal. In other words, at least a portion of the values of the signal 211 may be used as reference values or ideal values for the determination of the type of an occurred malfunction.

The determination of the type may for example be based on a comparison of signals 211 and 212, e.g., by determining a deviation of signals 211 and 212. For this purpose, the signal 211 may for example be stored or generated by the control system 150 during operation. Determining the deviation may comprise computing a difference between the signals 212, 213. Based on whether the deviation is below or exceeds a predetermined threshold, it is determined whether the malfunction is of the first type and, thus, whether the first, potentially more favorable, mitigation action is performable. The threshold may be predetermined based on historical/empirical data.

When the deviation between a reference signal that is indicative of a type of malfunction and a respective monitored signal exceeds such predetermined threshold, it may be determined that the monitored signal is not similar to the reference signal and, thus, likely not caused by a malfunction of the type indicated by the reference signal. When the deviation is below the predetermined threshold, it may be determined that the monitored signal is similar to the reference signal and, thus, likely caused by a malfunction of the type indicated by the reference signal.

In an exemplary implementation, a magnitude of the noise of signal 212 and/or a time delay caused by the dynamic may be determined. The determination of the type may additionally be based on the determined magnitude of noise and/or the determined time delay.

Figure 3 is a schematic diagram illustrating current signals 311, 312 according to a first and a second type of malfunction over time according to an example. Each of the current signals comprises a signal part 310 before an occurrence of the respective malfunction at time t0. After the occurrence of the respective malfunction, i.e., after time t0, the current signal 311 according to the first type of malfunction (e.g., a communication-based malfunction) is continued as depicted by the dashed line. As can be seen, the signal abruptly drops to a zero value upon the occurrence of the malfunction. The current signal 312 depicted by the solid line is the signal obtained upon occurrence of the second type of malfunction (e.g., a hardware-based malfunction). As can be see, the malfunction of the second type causes a significant transient response.

The current signals may be an input current or an output current of one of the converter modules 130a-130d of one of the power converters 130, 140. The signal 311 may be a reference current signal (dashed line) that is indicative of a malfunction of the communication (first type) and the signal 312 may be a monitored signal (solid line) indicative of a hardware-based malfunction of the power electronics, e.g., monitored by monitoring unit 131 or 133. As shown by the monitored signal 312, the hardware-based malfunction may cause a high monitored current that differs from the abrupt drop to zero of the reference signal/ideal signal, e.g., in the event of a communication loss. For the purpose of illustration, the different progress of signals 311, 312 after the occurrence of the respective malfunction at time t0 is highlighted by the ellipse framing both signals. Corresponding to the explanations provided above with respect to figure 2, the determination of the type may be based on the input/output current of a converter module.

It should be clear that the determination of the type may be based on any suitable parameter of the system shown in figure 1 or on any combination of such parameters.

It should further be clear that more than two types may be used to categorize potentially occurring malfunctions. Further, independent of the number of types, for each existent type of malfunction, one or more reference signals of one or more parameters may be stored or generated. The reference signals may be compared to respective monitored signals in order to determine the most similar type. For example, when two reference signals indicative of two different types are stored, the type of malfunction may be identified as the type for which the associated reference signal is most similar to the monitored signal (to which the deviation is smallest). Alternatively, any classification algorithm known in the art may be implemented in order to determine the type of the malfunction based on the one or more monitored parameters.

Referring again to figure 1, the determination of the type of the malfunction may further be based on a detected increased temperature, e.g., detected by heat detector 161, and/or on detected smoke, e.g., detected by smoke detector 162. The detection of heat and/or smoke may be an indication for a malfunction of the second type and may mean that the converter system 102 or other components of wind turbine 100 have already taken damage.

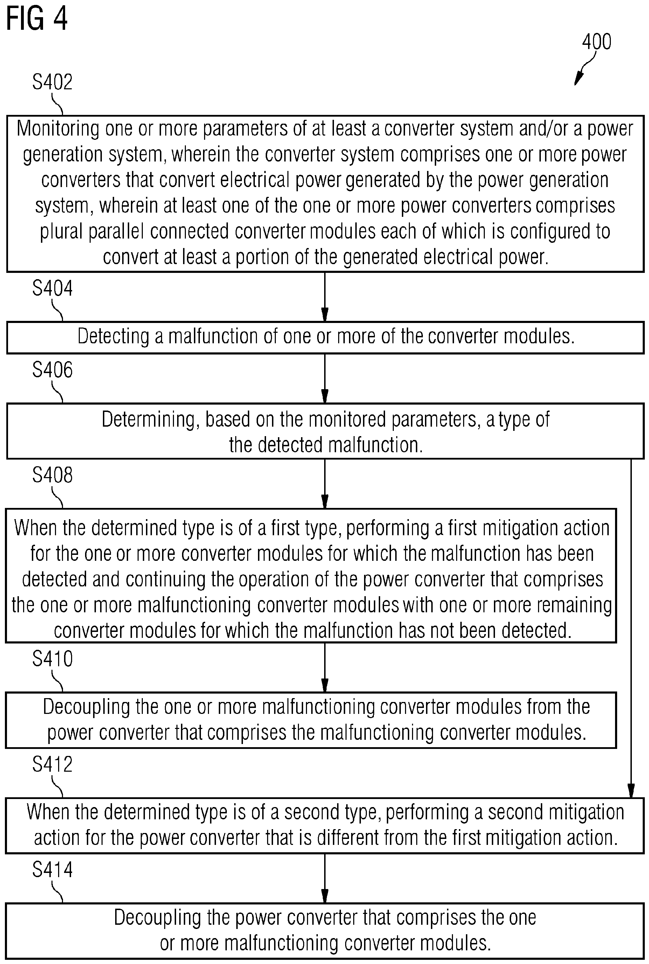

Figure 4 is a schematic flow diagram illustrating a method 400 of operating a converter system (e.g., the converter system 102 shown in fig. 1) of a wind turbine according to an exemplary implementation.

The sequence of the method steps in figure 4 is not limited to the shown sequence. The method is further not limited to the shown number of steps. Certain steps of the method may not be carried out, may be replaced or extended.

In a step S402, the method 400 may comprise monitoring one or more parameters of at least the converter system and/or the power generation system. The converter system may comprise one or more power converters that convert electrical power generated by a power generation system of the wind turbine. At least one of the one or more power converters may comprise plural parallel connected converter modules each of which is configured to convert at least a portion of the generated electrical power. In a step S404, the method 400 may comprise detecting a malfunction of one or more of the converter modules. In a step S406, the method may comprise determining, based on the monitored parameters and by a control system, a type of the detected malfunction. In dependance on the determined type, the method may, e.g., automatically or in response to receiving a manually generated control signal to continue, continue with steps S408 and S410 or with steps S412 and S414. In the step S408, the method 400 may comprise, when the determined type is of a first type, performing a first mitigation action for the one or more converter modules for which the malfunction has been detected and continuing the operation of the power converter that comprises the one or more malfunctioning converter modules with one or more remaining converter modules for which the malfunction has not been detected. In the step S410, the method 400 may comprise decoupling the one or more malfunctioning converter modules from the power converter that comprises the malfunctioning converter modules. In the step S412, the method 400 may comprise, when the determined type is of a second type, performing a second mitigation action for the power converter that is different from the first mitigation action. In the step S414, the method 400 may comprise decoupling the power converter that comprises the one or more malfunctioning converter modules.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of operating a converter system of a wind turbine, wherein the converter system (102) comprises one or more power converters (110, 140) that convert electrical power generated by a power generation system (101) of the wind turbine, wherein at least one of the one or more power converters (110, 140) comprises plural parallel connected converter modules (130a-d) each of which is configured to convert at least a portion of the generated electrical power, wherein operating the converter system (102) comprises:
monitoring one or more parameters of at least the converter system and/or the power generation system,
detecting a malfunction of one or more of the converter modules (130a-d),
determining, based on the monitored parameters, a type of the detected malfunction; and
when the determined type is of a first type,
performing a first mitigation action for the one or more converter modules for which the malfunction has been detected and
continuing the operation of the power converter (110) that comprises the one or more malfunctioning converter modules with one or more remaining converter modules for which the malfunction has not been detected; and
when the determined type is of a second type,
performing a second mitigation action for the power converter (110) that is different from the first mitigation action.

2. The method of claim 1, wherein performing the first mitigation action comprises decoupling the one or more malfunctioning converter modules from the power converter (110, 140) that comprises the malfunctioning converter modules and/or
wherein performing the second mitigation action comprises ceasing operation of the power converter (110, 140) comprising the one or more malfunctioning converter modules, and
wherein preferably the first mitigation action and/or the second mitigation action is controlled remotely/from a remote location.

3. The method of any of claims 1 or 2, wherein the second type of the detected malfunction comprises a malfunction of a component of the one or more converter modules associated with the flow of electrical power to be converted through the modules, preferably a hardware-based malfunction of power electronics included in the one or more malfunctioning converter modules, wherein preferably, the component of the one or more converter modules comprises at least one of one or more switching units, a DC-link, a voltage control unit of the DC-link and one or more filters.

4. The method of any of the preceding claims, wherein at least one of the monitored parameters is monitored at a first site and communicated to a second site, and wherein the first type of the detected malfunction comprises a malfunction of the communication between the first site and the second site.

5. The method of any of the preceding claims, wherein at least one of the monitored parameters is indicative of an operational state of the converter system, wherein the operational state comprises at least one of a power, a voltage and a current of the converter system, in particular, of the at least one of the one or more power converters and more particularly, of at least one of the parallel connected converter modules.

6. The method of claim 5,
wherein the monitored power comprises a power input and/or a power output of at least one of the one or more malfunctioning converter modules, and/or
wherein the monitored voltage comprises a voltage input and/or a voltage output of at least one of the one or more malfunctioning converter modules, and/or
wherein the monitored current comprises a current input and/or a current output of at least one of the one or more malfunctioning converter modules, and/or
wherein at least one of the one or more malfunctioning converter modules comprises or is coupled with a DC-link (134) and wherein the monitored voltage comprises a DC-link voltage of the DC-link and/or wherein the monitored current comprises a DC-link current of the DC-link.

7. The method of any of the preceding claims, wherein determining if the malfunction is of the first type or of the second type is based on a transient response of the monitored parameter, in particular on a presence or absence of a transient response, wherein preferably, the malfunction is of the first type if no transient response is present and is of the second type if a transient response is present.

8. The method of any of the preceding claims, wherein determining the type of the detected malfunction comprises
obtaining one or more reference values for at least one of the one or more monitored parameters, the reference values being indicative of one type,
obtaining, by the monitoring, one or more monitored values for the at least one monitored parameter, and
computing a deviation between the obtained reference values and the obtained monitored values, and
basing the determination of the type of the detected malfunction on the deviation.

9. The method of claim 8, wherein basing the determination of the type of the detected malfunction on the deviation comprises
determining a magnitude of noise acting on the obtained monitored values and/or a time delay between the obtained reference values and the obtained monitored values.

10. The method of claim 8 or 9, wherein determining the type of the malfunction comprises
determining that the deviation is below a threshold in order to determine that the type is the one type.

11. The method of any of the preceding claims, wherein operating the converter system comprises
detecting an increased temperature of the one or more malfunctioning converter modules and/or a destructive impact, in particular a mechanical damage and/or an electrical loading above a maximum allowed loading, on the one or more malfunctioning converter modules, and
basing the determination of the type of the malfunction further on the detection of the increased temperature and/or the destructive impact,
wherein preferably the detection is based on obtaining a thermal, visual and/or audible indication of the increased temperature and/or the destructive impact, and/or
detecting the increased temperature and/or the destructive impact comprises
detecting at least one of heat, smoke, noise and an electrical short-circuit.

12. A control system for controlling an operation of a converter system of a wind turbine, wherein the converter system (102) comprises one or more power converters (110, 140) that convert electrical power generated by a power generation system (101) of the wind turbine, wherein the control system (150) is configured to perform a method according to any of claims 1-11.

13. A converter system of a wind turbine, wherein the converter system comprises one or more power converters (110, 140) that are configured to convert electrical power generated by a power generation system of the wind turbine, wherein at least one of the one or more power converters comprises plural parallel connected converter modules (130a-d) each of which is configured to convert at least a portion of the generated electrical power, wherein the converter system is configured to be controlled by the control system of claim 12.

14. A system, wherein the system comprises
a converter system (102) according to claim 13 configured to convert electrical power generated by a power generation system (101) of a wind turbine, and
a control system (150) according to claim 12, wherein the control system is communicatively coupled with the converter system and wherein the control system (150) is configured to control an operation of the converter system (102).

15. A computer program for controlling an operation of a converter system (102), wherein the computer program comprises control instructions which, when executed by a processing unit (151) of a control system (150) controlling the operation of the converter system (102), cause the processing unit to perform the method according to any of claims 1-11.
